# EUROPEAN PATENT SPECIFICATION

(11) **EP 3 869 017 B1**
(45) Date of publication and mention of the grant of the patent: **30.11.2022**
(21) Application number: 20204315.4
(22) Date of filing: 28.10.2020
(51) Int. Cl.: F01M 11/02, F01L 1/02, F01L 1/053, B62M 9/16, F16H 7/08, F01M 9/10, F01L 1/047

(54) **INTERNAL COMBUSTION ENGINE AND VEHICLE**
VERBRENNUNGSMOTOR UND FAHRZEUG
MOTEUR À COMBUSTION INTERNE ET VÉHICULE

(30) Priority: 19.02.2020 JP 2020026005
(43) Date of publication of application: 25.08.2021
(73) Proprietor: YAMAHA HATSUDOKI KABUSHIKI KAISHA, Iwata-shi, Shizuoka-ken 438-8501 (JP)
(72) Inventor: TANAKA, Hiroyuki, Shizuoka-ken, 438-8501 (JP)
(74) Representative: Marks & Clerk LLP

(56) References cited:
- EP-A1- 2 806 116
- US-A1- 2006 260 873
- US-A1- 2016 208 663
- US-B2- 10 514 085

## Description

### FIELD OF INVENTION

The present invention relates to an internal combustion engine and to a vehicle, such as a straddled vehicle.

### BACKGROUND TO INVENTION

Internal combustion engines including a cam chain for transmitting the driving force of the crankshaft to the camshaft, and a hydraulic tensioner for pushing the cam chain to thereby tension the cam chain have been known in the art. With such internal combustion engines, there is a need to supply oil to each of the camshaft and the hydraulic tensioner.

For example, JP2006-291924A (KAWASAKI HEAVY IND LTD) discloses an internal combustion engine including a passage, a first branch passage and a second branch passage formed inside the cylinder head, wherein the passage guides oil from the cylinder block, the first branch passage extends from this passage toward the camshaft, and the second branch passage extends from this passage toward the oil chamber of the hydraulic tensioner. With this internal combustion engine, the oil is distributed, inside the cylinder head, toward the camshaft and the oil chamber of the hydraulic tensioner.

With the internal combustion engine described above, however, it is difficult to supply, in a well-balanced manner, a desirable amount of oil to each of the camshaft and the oil chamber of the hydraulic tensioner. If the first branch passage and the second branch passage can be optimally designed, independent of each other, it is possible to supply, in a well-balanced manner, a desirable amount of oil to each of the camshaft and the oil chamber of the hydraulic tensioner. However, simply optimizing the configuration of each branch passage will complicate the structure of oil passages inside the cylinder head. This will lead to an increase in cost of the internal combustion engine. It will also make it difficult to machine oil passages inside the cylinder head. Forming oil passages using a cutting tool, for example, requires a sophisticated machining process so as not to clog the oil passages with cutting powder.

An object of at least one embodiment of at least one aspect of the present invention may be to seek to address one or more problems and/or disadvantages in the prior art.

An object of at least one embodiment of at least one aspect of the present invention may be to seek to provide an internal combustion engine and/or a vehicle having the same, with which it may be possible to supply, in a well-balanced manner, a desirable amount of oil to each of the camshaft and the oil chamber of the hydraulic tensioner, while avoiding complicating the structure of the oil passages inside the cylinder head.

### SUMMARY OF INVENTION

Various aspects of the present invention are defined in the independent claim(s) appended hereto. Some optional and/or preferred features are defined in the dependent claims appended hereto.

According to a first aspect of the present invention there is provided an internal combustion engine comprising:
a crankcase that supports a crankshaft;
a cylinder body that is connected to the crankcase and comprises a cylinder therein;
a cylinder head that is connected to the cylinder body and supports a camshaft;
a cam cap that rotatably sandwiches the camshaft between the cam cap and the cylinder head;
a first sprocket that is secured to the crankshaft;
a second sprocket that is secured to the camshaft;
a cam chain that is wound around the first sprocket and the second sprocket;
a hydraulic tensioner that tensions the cam chain, wherein the hydraulic tensioner comprises an oil chamber to which oil is supplied and which is attached to the cylinder head;
an oil passage that comprises an outlet port and is formed inside the cylinder body; and
an oil passage that is formed inside the cylinder head, wherein:
   the oil passage formed inside the cylinder head comprises:
      a first passage comprising a first inlet and a first outlet, wherein the first inlet communicates with the outlet port of the oil passage formed inside the cylinder body;
      a second passage comprising a second inlet and a second outlet, wherein the second inlet is connected to the first outlet of the first passage;
      a third passage comprising a third inlet and a third outlet, wherein the third inlet is connected to the second outlet of the second passage, and the third outlet is opening toward the camshaft or the cam cap;
      a fourth passage comprising a fourth inlet and a fourth outlet, wherein the fourth inlet is connected to the first outlet of the first passage and the second inlet of the second passage; and
      a fifth passage comprising a fifth inlet and a fifth outlet, wherein the fifth inlet is connected to the fourth outlet of the fourth passage, and the fifth outlet is opening toward the oil chamber of the hydraulic tensioner:
   a diameter of the third passage is smaller than a diameter of the second passage;
   a diameter of the fifth passage is smaller than a diameter of the fourth passage; and
   the diameter of the third passage is smaller than the diameter of the fifth passage.

With the internal combustion engine described above, oil may be supplied to the first passage inside the cylinder head from the oil passage of the cylinder body. A portion of oil flowing through the first passage may be supplied to the camshaft through the second passage and the third passage. Another portion of oil flowing through the first passage may be supplied to the oil chamber of the hydraulic tensioner through the fourth passage and the fifth passage. Herein, since the diameter of the third passage is smaller than the diameter of the second passage, oil flowing toward the camshaft may be restrained through the third passage. Since it is possible to adjust the flow rate of oil by appropriately setting the diameters of the second passage and the third passage, it is possible to supply a desirable amount of oil to the camshaft without complicating the configuration of the oil passage inside the cylinder head. Since the diameter of the fifth passage is smaller than the diameter of the fourth passage, oil flowing toward the oil chamber of the hydraulic tensioner is restrained through the fifth passage. Since it is possible to adjust the flow rate of oil by appropriately setting the diameters of the fourth passage and the fifth passage, it is possible to supply a desirable amount of oil to the oil chamber of the hydraulic tensioner without complicating the configuration of the oil passage inside the cylinder head. Moreover, with the internal combustion engine described above, the diameter of the third passage is smaller than the diameter of the fifth passage. Thus, it is possible to adjust, in a well-balanced manner, the amount of oil supplied to each of the camshaft and the oil chamber of the hydraulic tensioner. Therefore, with the internal combustion engine described above, it is possible to supply, in a well-balanced manner, a desirable amount of oil to each of the camshaft and the oil chamber of the hydraulic tensioner without complicating the structure of the oil passage inside the cylinder head.

According to one preferred embodiment, the diameter of the second passage may be less than or equal to a diameter of the first passage, and the diameter of the fourth passage may be less than or equal to the diameter of the first passage.

With the embodiment described above, it may be possible to supply, in a well-balanced manner, a desirable amount of oil to each of the camshaft and the oil chamber of the hydraulic tensioner without complicating the structure of the oil passage inside the cylinder head.

According to one preferred embodiment, a length of the third passage may be shorter than a length of the second passage.

With the embodiment described above, it may be possible to supply, in a well-balanced manner, a desirable amount of oil to each of the camshaft and the oil chamber of the hydraulic tensioner without complicating the structure of the oil passage inside the cylinder head. According to one preferred embodiment, a length of the third passage may be shorter than a length of the first passage.

With the embodiment described above, it may be possible to supply, in a well-balanced manner, a desirable amount of oil to each of the camshaft and the oil chamber of the hydraulic tensioner without complicating the structure of the oil passage inside the cylinder head.

According to one preferred embodiment, a length of the third passage may be shorter than a length of the fourth passage.

With the embodiment described above, it may be possible to supply, in a well-balanced manner, a desirable amount of oil to each of the camshaft and the oil chamber of the hydraulic tensioner without complicating the structure of the oil passage inside the cylinder head.

According to one preferred embodiment, a length of the third passage may be shorter than a length of the fifth passage.

With the embodiment described above, it may be possible to supply, in a well-balanced manner, a desirable amount of oil to each of the camshaft and the oil chamber of the hydraulic tensioner without complicating the structure of the oil passage inside the cylinder head.

According to one preferred embodiment, a center line of the second passage and a center line of the third passage may be on the same straight line.

According to the embodiment described above, the configuration of the second passage and the third passage may be simple. Moreover, it may be possible to easily machine the second passage and the third passage.

According to one preferred embodiment, a center line of the first passage, a center line of the second passage and a center line of the third passage may be on the same straight line.

According to the embodiment described above, the configuration of the first to third passages may be simple. Moreover, it may be possible to easily machine the first to third passages.

According to one preferred embodiment, a center line of the third passage may be not aligned with the camshaft as seen from an axial direction of the camshaft.

According to the embodiment described above, there may be no need to form the third passage at such a position that the center line of the third passage intersects with the camshaft as seen from the axial direction of the camshaft. Since there is little limitation on the position of the third passage, it may be possible to further reduce complication of the structure of the oil passage inside the cylinder head.

According to one preferred embodiment, the internal combustion engine may comprise a gasket interposed between the cylinder body and the cylinder head. The first inlet of the first passage may be not aligned with the outlet port of the oil passage of the cylinder body as seen along a center line of the first passage of the cylinder head. The gasket may comprise a hole that may connect between the outlet port of the oil passage of the cylinder body and the first inlet of the first passage of the cylinder head.

According to the embodiment described above, there may be no need to align the position of the first inlet of the first passage formed inside the cylinder head with the position of the outlet port of the oil passage formed inside the cylinder body. Since there is little limitation on the position of the first passage, it may be possible to further reduce complication of the structure of the oil passage inside the cylinder head.

According to a second aspect of the present invention there is provided a vehicle comprising an internal combustion engine according to the first aspect of the present invention. The vehicle may comprise a power transmitting member that may be linked to the internal combustion engine. The vehicle may comprise a driving wheel that may be linked to the power transmitting member.

According to the present invention, it may be possible to provide an internal combustion engine and a vehicle having same, with which it may be possible to supply, e.g., in a well-balanced manner, a desirable amount of oil to each of the camshaft and the oil chamber of the hydraulic tensioner, while avoiding complicating the structure of the oil passages inside the cylinder head.

### BRIEF DESCRIPTION OF DRAWINGS

An embodiment of the present invention will now be described, by way of example only, and with reference to the accompanying drawings, which are:
- **FIG. 1**: side view of a motorcycle according to one embodiment of the present invention;
- **FIG. 2**: a side view of an internal combustion engine;
- **FIG. 3**: a cross-sectional view of a portion of the internal combustion engine;
- **FIG. 4**: a cross-sectional view of a portion of the internal combustion engine, taken along line IV-IV of FIG. 3;
- **FIG. 5**: a side view of a tensioner lifter of a hydraulic tensioner;
- **FIG. 6**: a partially-cutaway side view showing a portion of the internal combustion engine;
- **FIG. 7**: a conceptual diagram showing the configurations and the dimensions of first to fourth passages;
- **FIG. 8**: a conceptual diagram showing the configuration and the dimension of a fifth passage;
- **FIG. 9**: a plan view of a gasket; and
- **FIG. 10**: an enlarged view showing the area denoted as X in FIG. 9.

### DETAILED DESCRIPTION OF DRAWINGS

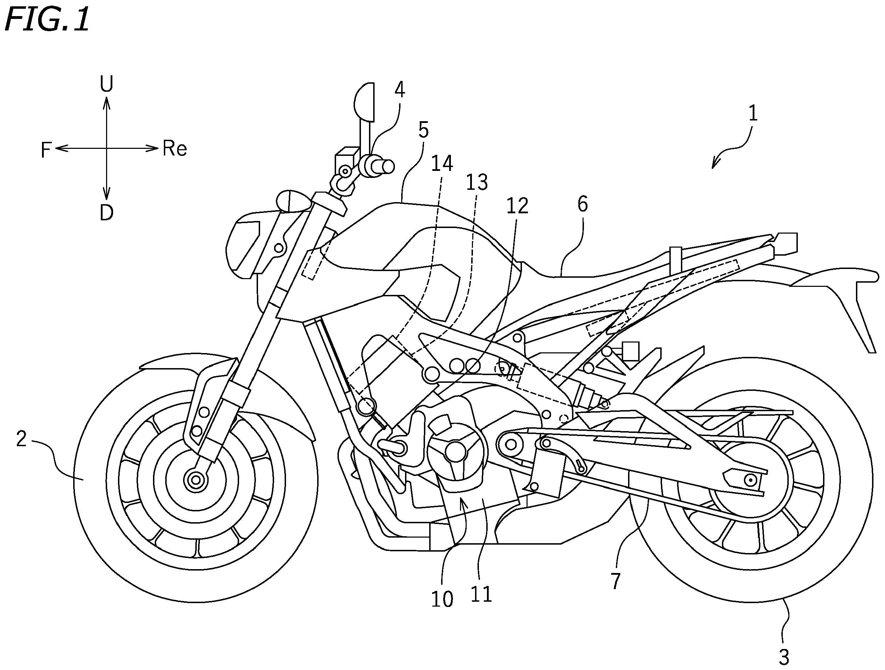

An embodiment of the present invention will now be described with reference to the drawings. FIG. 1 is a side view of a motorcycle 1, which is an example of a vehicle. The motorcycle 1 has a front wheel 2, a rear wheel 3, an internal combustion engine (hereinafter referred to as the engine) 10, a handle (handlebars) 4, a fuel tank 5, and a seat 6. The engine 10 is linked to the rear wheel 3 by a power transmitting member such as a chain 7. The rear wheel 3 is a driving wheel that is driven by the engine 10.

The terms front, rear, left, right, up and down, as used in the description below, refer to these directions as seen from a virtual rider seated on the seat 6 while the motorcycle 1 is standing upright on a horizontal surface with no rider and no load thereon, unless specified otherwise. The designations F, Re, L, R, U and D, as used in the figures, refer to front, rear, left, right, up and down, respectively. The term "front/forward" refers not only to the direction that extends in the front direction along the vehicle center line, as the vehicle is seen from above or as the vehicle is seen from below, but also to directions that are inclined left/right from that direction by an angle that is less than or equal to 45 degrees. Similarly, the term "rear/rearward" refers not only to the direction that extends rearward along the vehicle center line, as the vehicle is seen from above or as the vehicle is seen from below, but also to directions that are inclined left/right from that direction by an angle of 45 degrees of less. The term "left/leftward" refers not only to the direction that extends leftward vertical to the vehicle center line, as the vehicle is seen from above or as the vehicle is seen from below, but also to directions that are inclined frontward/rearward from that direction by an angle of 45 degrees of less. The term "right/rightward" refers not only to the direction that extends rightward vertical to the vehicle center line, as the vehicle is seen from above or as the vehicle is seen from below, but also to directions that are inclined frontward/rearward from that direction by an angle of 45 degrees of less. The term "up/upward" refers not only to the vertically upward direction, as the vehicle is seen from sideways, but also to directions that are inclined frontward/rearward from that direction by an angle of 45 degrees of less. The term "down/downward" refers not only to the vertically downward direction, as the vehicle is seen from sideways, but also to directions that are inclined frontward/rearward from that direction by an angle of 45 degrees of less.

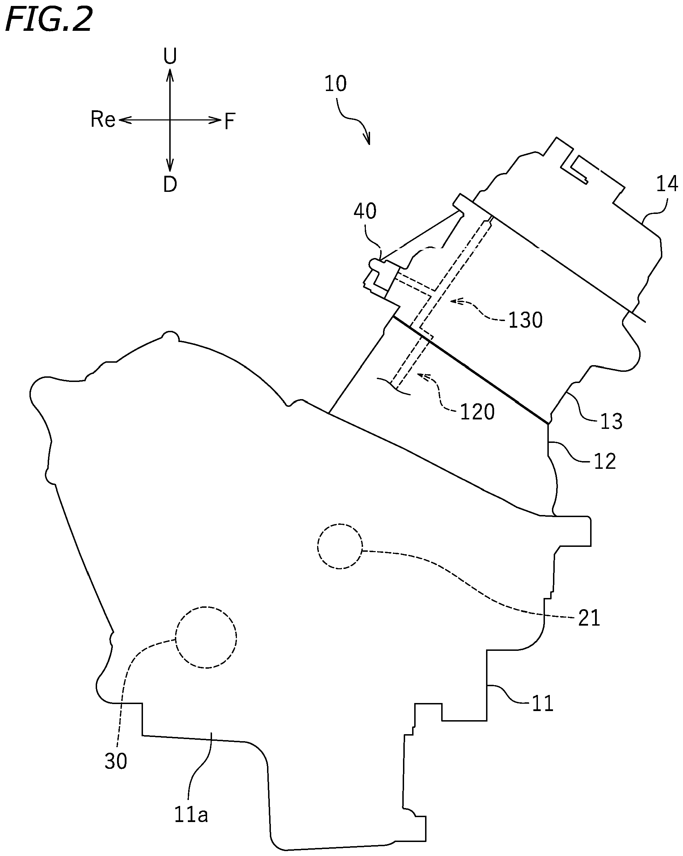

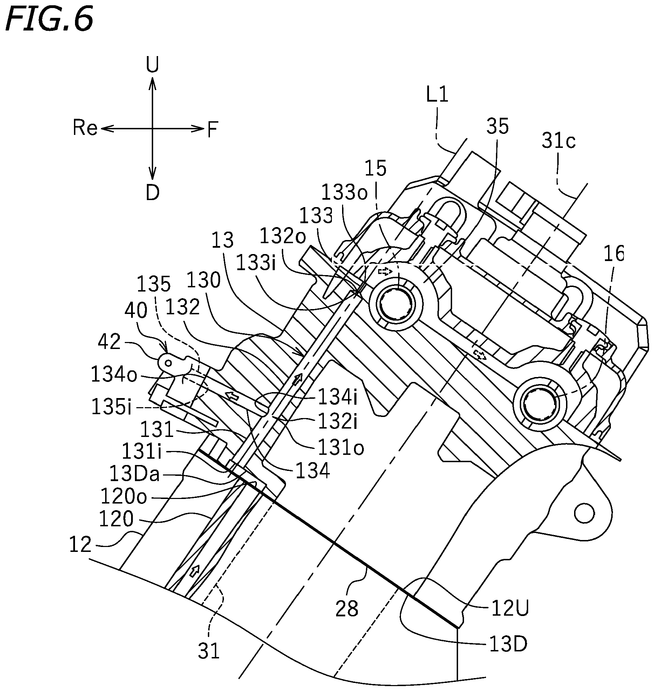

FIG. 2 is a side view of the engine 10. Note that FIG. 2 shows only the outline of the engine 10. The engine 10 has a crankcase 11, a cylinder body 12 connected to the crankcase 11, a cylinder head 13 connected to the cylinder body 12, and a cylinder head cover 14 connected to the cylinder head 13. Although not shown in FIG. 2, a gasket 28 (see FIG. 6) is sandwiched between the cylinder body 12 and the cylinder head 13.

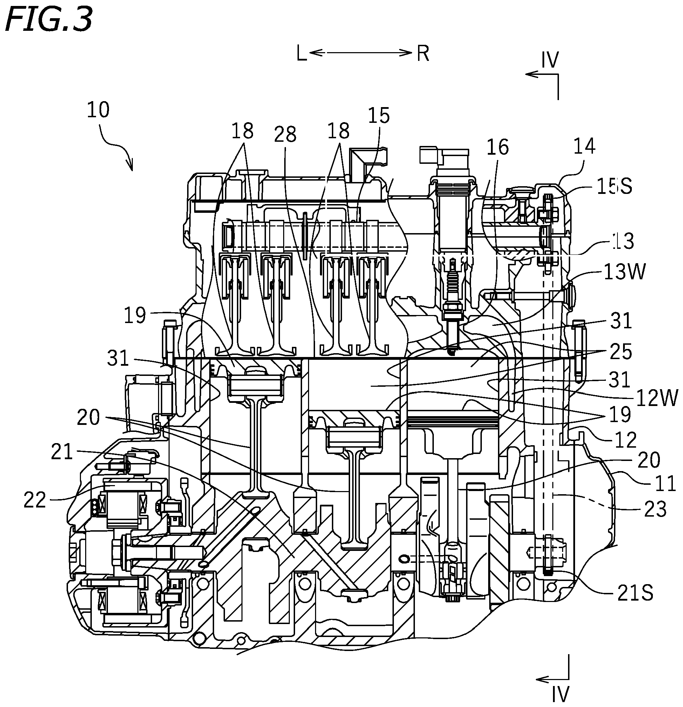

FIG. 3 is a cross-sectional view of a portion of the engine 10. The engine 10 is a multi-cylinder engine. In the present embodiment, the engine 10 is a three-cylinder engine having three cylinders 31. Note, however, that there is no limitation thereto. The number of cylinders of the engine 10 is not limited to three, but it may be two or four or more. The engine 10 may be a single-cylinder engine having only one cylinder.

The crankcase 11 rotatably supports the crankshaft 21. The crankshaft 21 is arranged inside the crankcase 11. The crankshaft 21 extends in the vehicle width direction. A generator 22 is attached to the left end portion of the crankshaft 21. A first sprocket 21S is secured to the right end portion of the crankshaft 21.

The cylinder 31 is provided inside the cylinder body 12. A piston 19 is accommodated inside each cylinder 31. The piston 19 is linked to the crankshaft 21 by a connecting rod 20. The cylinder head 13, the cylinder 31 and the piston 19 together define a combustion chamber 25.

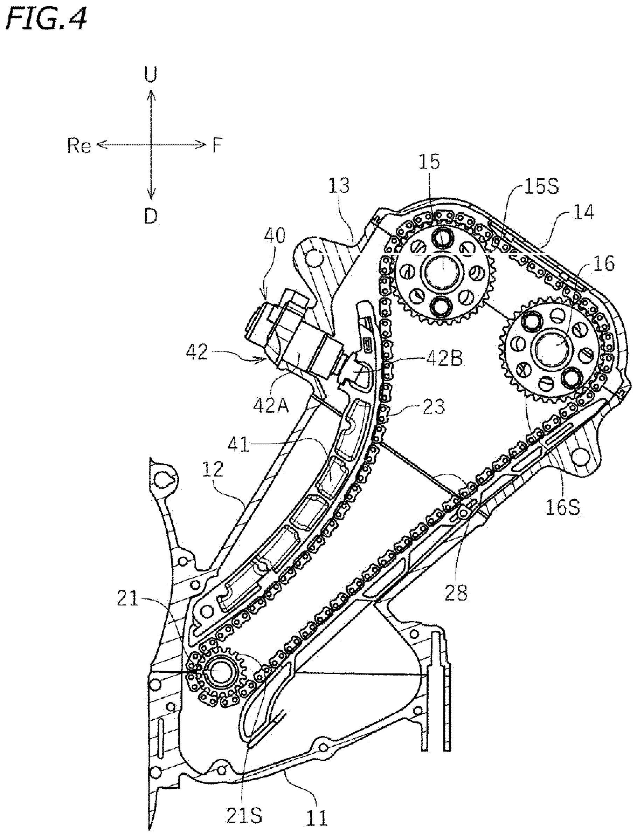

The cylinder head 13 is provided with an ignitor 16, an intake valve 18 and an exhaust valve (not shown). As shown in FIG. 4, an intake camshaft 15 and an exhaust camshaft 16 are rotatably supported on the cylinder head 13. As shown in FIG. 6, a cam cap 35 is attached to the cylinder head 13. The intake camshaft 15 and the exhaust camshaft 16 are sandwiched between the cylinder head 13 and the cam cap 35. The cam cap 35 rotatably sandwiches the intake camshaft 15 and the exhaust camshaft 16 between the cam cap 35 and the cylinder head 13. As shown in FIG. 4, a second sprocket 15S is secured to the intake camshaft 15, and a third sprocket 16S is secured to the exhaust camshaft 16.

A cam chain 23 is wound around the first sprocket 21S, the second sprocket 15S and the third sprocket 16S. The driving force of the crankshaft 21 is transmitted to the intake camshaft 15 and the exhaust camshaft 16 by the cam chain 23. The intake camshaft 15 and the exhaust camshaft 16 rotate together with the crankshaft 21. The intake valve 18 and the exhaust valve are driven as the crankshaft 21 rotates.

The engine 10 has a hydraulic tensioner 40 for tensioning the cam chain 23. The hydraulic tensioner 40 has a chain guide 41 in contact with the cam chain 23, and a tensioner lifter 42 for pressing the chain guide 41 against the cam chain 23. The tensioner lifter 42 is attached to the cylinder head 13.

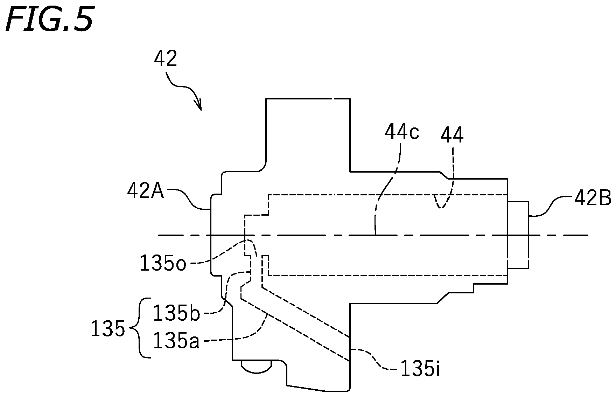

As shown in FIG. 5, the tensioner lifter 42 has a tensioner body 42A having an oil chamber 44 formed therein, and a plunger 42B movably inserted into the oil chamber 44. The plunger 42B can move leftward and rightward in FIG. 5, and is pressed rightward. As shown in FIG. 4, the chain guide 41 is connected to the tip of the plunger 42B.

As shown in FIG. 2, an oil pan 11a in which oil is stored is provided at the bottom of the crankcase 11. An oil pump 30 is arranged inside the crankcase 11. Although not shown in the figure, the oil pump 30 is linked to the crankshaft 21. The oil pump 30 is driven by the crankshaft 21.

Oil is supplied to the intake camshaft 15, the exhaust camshaft 16 and the hydraulic tensioner 40. Next, oil passages for supplying oil to the intake camshaft 15, the exhaust camshaft 16 and the hydraulic tensioner 40 will be described.

As shown in FIG. 2, the engine 10 has an oil passage 120 formed inside the cylinder body 12, and an oil passage 130 formed inside the cylinder head 13.

Although not shown in the figure, the oil passage 120 formed inside the cylinder body 12 is connected to the oil pump 30 by another oil passage. Oil is supplied from the oil pump 30 to the oil passage 120. As shown in FIG. 6, the oil passage 120 is provided outward of the cylinder 31 in the radial direction of the cylinder 31. The oil passage 120 extends parallel to the cylinder axial line 31c. The oil passage 120 has an outlet port 120o. The outlet port 120o is formed on an upper surface 12U of the cylinder body 12. Note that the upper surface 12U of the cylinder body 12 is a surface that opposes the lower surface of the gasket 28. In other words, the upper surface 12U of the cylinder body 12 is a surface that opposes a lower surface 13D of the cylinder head 13 with the gasket 28 therebetween. The outlet port 120o is opening upward in a direction parallel to the cylinder axial line 31c.

The oil passage 130 formed inside the cylinder head 13 has a first passage 131, a second passage 132 and a third passage 133. The oil passage 130 also has a fourth passage 134 and a fifth passage 135. The first passage 131, the second passage 132 and the third passage 133 are passages for supplying oil toward the intake camshaft 15 and the exhaust camshaft 16. Note that in the present embodiment, oil is supplied to the intake camshaft 15 and the exhaust camshaft 16 in this order. The first passage 131, the fourth passage 134 and the fifth passage 135 are passages for supplying oil toward the oil chamber 44 of the hydraulic tensioner 40.

The second passage 132 is connected to the first passage 131, and the third passage 133 is connected to the second passage 132. The second passage 132 is located upward of the first passage 131, and the third passage 133 is located upward of the second passage 132. In the present embodiment, the first passage 131, the second passage 132 and the third passage 133 extend in a straight line. The center line of the first passage 131, the center line of the second passage 132 and the center line of the third passage 133 are located on the same straight line L1. Herein, the center line of the first passage 131, the center line of the second passage 132 and the center line of the third passage 133 are parallel to the cylinder axial line 31c. Note that the "center line", as used herein, refers to a straight line rather than a line segment.

The first passage 131 has a first inlet 131i and a first outlet 131o. The first inlet 131i is formed on the lower surface 13D of the cylinder head 13. In the present embodiment, a depressed portion 13Da is provided on the lower surface 13D of the cylinder head 13, and the first inlet 131i is formed in the depressed portion 13Da. Note that the lower surface 13D of the cylinder head 13 is a surface that opposes the upper surface of the gasket 28. In other words, the lower surface 13D of the cylinder head 13 is a surface that opposes the upper surface 12U of the cylinder body 12 with the gasket 28 therebetween. The first inlet 131i is opening downward in a direction parallel to the cylinder axial line 31c.

The second passage 132 has a second inlet 132i and a second outlet 132o. The second inlet 132i is connected to the first outlet 131o of the first passage 131. The diameter of the second passage 132 is preferably less than or equal to the diameter of the first passage 131. Herein, the diameter of the second passage 132 is equal to the diameter of the first passage 131. The length of the second passage 132 is longer than the length of the first passage 131.

The third passage 133 has a third inlet 133i and a third outlet 133o. The third inlet 133i is connected to the second outlet 132o of the second passage 132. The third outlet 133o is opening toward the cam cap 35 (see FIG. 6). In the present embodiment, oil flowing out of the third outlet 133o is supplied to the intake camshaft 15 through the cam cap 35. Note, however, that the third outlet 133o may be opening toward the intake camshaft 15. Oil flowing out of the third outlet 133o may be supplied directly to the intake camshaft 15. In the present embodiment, as shown in FIG. 6, the center line of the third passage 133 (see the straight line L1) is not aligned with the intake camshaft 15, as seen from the axial direction of the intake camshaft 15. Note, however, that there is no limitation thereto. The center line of the third passage 133 may overlap with the intake camshaft 15. There is no particular limitation on the position of the third outlet 133o.

When the first passage 131 and the second passage 132 are regarded as one passage, the fourth passage 134 is branching off this passage. The fourth passage 134 has a fourth inlet 134i and a fourth outlet 134o. The fourth inlet 134i is connected to the first outlet 131o of the first passage 131. The fourth inlet 134i is also connected to the second inlet 132i of the second passage 132. The diameter of the fourth passage 134 is smaller than the diameter of the first passage 131 and is smaller than the diameter of the second passage 132. On the other hand, the diameter of the fourth passage 134 is larger than the diameter of the third passage 133.

The fifth passage 135 is formed inside the tensioner lifter 42. As shown in FIG. 5, the fifth passage 135 has a fifth inlet 135i and a fifth outlet 135o. The fifth inlet 135i is connected to the fourth outlet 134o of the fourth passage 134. The fifth outlet 135o is connected to the oil chamber 44. The fifth outlet 135o is opening toward the oil chamber 44. In the present embodiment, the fifth passage 135 has a passage portion 135a that extends in a direction inclined relative to a center line 44c of the oil chamber 44, and a passage portion 135b that extends in a direction perpendicular to the center line 44c of the oil chamber 44. The passage portion 135a and the passage portion 135b are each formed in a straight line. The passage portion 135a is inclined relative to the passage portion 135b. The fifth passage 135 is bent. The diameter of the passage portion 135b is smaller than the diameter of the passage portion 135a. The diameter of the fifth passage 135 is not constant but is varied therealong. Note that the diameter of a passage, as used herein, refers to the mean diameter of the passage where the diameter of the passage is not constant.

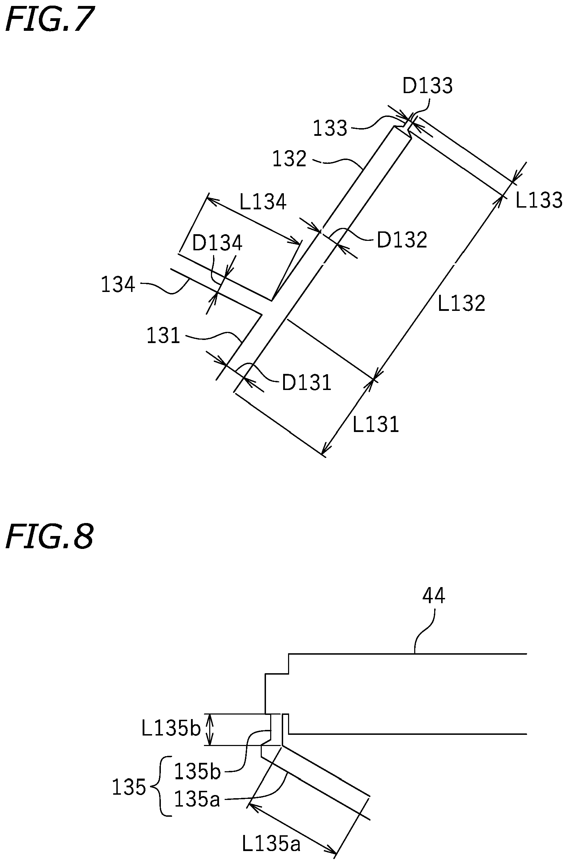

Although there is no particular limitation on the diameters of the first to fifth passages 131 to 135 relative to each other, the diameters are as follows in the present embodiment. The diameter of the third passage 133 is smaller than the diameter of the second passage 132. The diameter of the fifth passage 135 is smaller than the diameter of the fourth passage 134. The diameter of the third passage 133 is smaller than the diameter of the fifth passage 135. As described above, the diameter of the second passage 132 is less than or equal to the diameter of the first passage 131. The diameter of the fourth passage 134 is less than or equal to the diameter of the first passage 131. The diameter of the second passage 132 is larger than the diameter of the fourth passage 134. Where the diameters of the first passage 131, the second passage 132, the third passage 133, the fourth passage 134 and the fifth passage 135 are denoted respectively as D131, D132, D133, D134 and D135 (see FIG. 7), D133 < D135 < D134 < D132 ≤ D131 holds true in the present embodiment. Although there is no numerical limitation on D131 to D135, D131 = 6.0mm, D132 = 6.0mm, D133 = 1.7mm, D134 = 5.0mm and D135 = 4.0mm in the present embodiment.

Although there is no particular limitation on the lengths of the first to fifth passages 131 to 135 relative to each other, the lengths are as follows in the present embodiment. The length of the third passage 133 is shorter than the length of any of the first passage 131, the second passage 132, the fourth passage 134 and the fifth passage 135. The length of the fourth passage 134 is shorter than the length of the second passage 132. The length of the first passage 131 is shorter than the length of the second passage 132. The length of the first passage 131 is shorter than the length of the fourth passage 134. The length of the fifth passage 135 is shorter than the length of the fourth passage 134. Where the lengths of the first passage 131, the second passage 132, the third passage 133, the fourth passage 134 and the fifth passage 135 are denoted respectively as L131, L132, L133, L134 and L135 (see FIG. 7), L133 < L135 < L131 < L134 < L132 holds true in the present embodiment. Note that the length L135 of the fifth passage 135 is a length obtained by adding together the length L135a of the passage portion 135a and the length L135b of the passage portion 135b (see FIG. 8). That is, L135 = L135a + L135b. Although there is no numerical limitation on L131 to L135, L131 = 25 mm, L132 = 70 mm, L133 = 5 mm, L134 = 30 mm and L135 = 20 mm in the present embodiment.

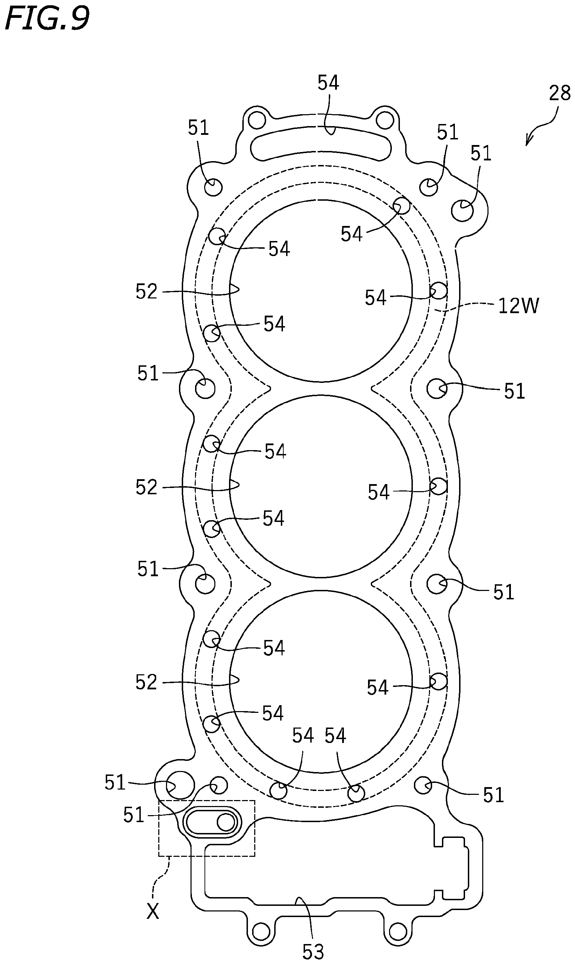

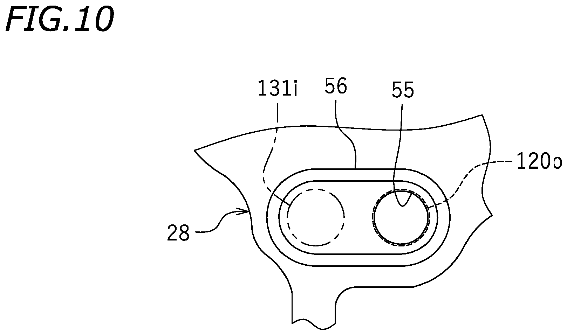

As shown in FIG. 6, the oil passage 120 inside the cylinder body 12 and the first passage 131 inside the cylinder head 13 are both parallel to the cylinder axial line 31c, but are not aligned with each other. The oil passage 120 and the first passage 131 are connected together with the gasket 28 therebetween. FIG. 9 is a plan view of the gasket 28. FIG. 10 is an enlarged view showing the area denoted as X in FIG. 9.

As shown in FIG. 9, the gasket 28 has bolt holes 51 through which bolts (not shown) for connecting the cylinder head 13 and the cylinder body 12 together are inserted, cylinder holes 52 located upward of the cylinders 31, and a cam chain hole 53 through which the cam chain 23 is inserted. The gasket 28 also has coolant passage holes 54 that connect together a water jacket 12W formed in the cylinder body 12 (see FIG. 3) and a water jacket 13W formed in the cylinder head 13.

As shown in FIG. 10, the gasket 28 further has an oil hole 55 through which oil passes. A ring-shaped protruding portion 56, which is protruding upward, is formed around the oil hole 55. The ring-shaped protruding portion 56 is a so-called "bead", which is herein formed in an oblong circular shape. The ring-shaped protruding portion 56 is formed in a so-called "oval shape". The oil hole 55 is formed inside the ring-shaped protruding portion 56. The oil hole 55 is connected to the outlet port 120o of the oil passage 120 of the cylinder body 12. As seen along the cylinder axial line 31c, the oil hole 55 is located directly above the outlet port 120o of the oil passage 120. The first inlet (in other words, the inlet of the oil passage 130 of the cylinder head 13) 131i of the first passage 131 is opening inside the ring-shaped protruding portion 56. The first inlet 131i of the first passage 131 is located inside the ring-shaped protruding portion 56. The outlet port 120o of the oil passage 120 and the first inlet 131i of the first passage 131 communicate with each other inside the ring-shaped protruding portion 56 of the gasket 28. Therefore, the oil passage 120 of the cylinder body 12 and the oil passage 130 of the cylinder head 13 are connected to each other with the gasket 28 therebetween.

Next, the flow of oil will be described. Oil stored in the oil pan 11a is supplied to the oil passage 120 by the oil pump 30. Oil is supplied to the oil passage 130 of the cylinder head 13 from the oil passage 120 of the cylinder body 12 through the oil hole 55 of the gasket 28. Oil supplied to the oil passage 130 flows through the first passage 131, and then flows into the second passage 132 and the fourth passage 134. Oil in the second passage 132 flows through the third passage 133, and is then supplied to the cam cap 35, the intake camshaft 15, the exhaust camshaft 16 and the cam chain 23. On the other hand, oil in the fourth passage 134 is supplied to the oil chamber 44 of the tensioner lifter 42 of the hydraulic tensioner 40 through the fifth passage 135.

As described above, with the engine 10 according to the present embodiment, oil is supplied from the oil passage 120 of the cylinder body 12 to the first passage 131 of the cylinder head 13, and a portion of the oil is supplied to the intake camshaft 15 through the second passage 132 and the third passage 133, and another portion thereof is supplied to the oil chamber 44 of the hydraulic tensioner 40 through the fourth passage 134 and the fifth passage 135. Herein, since the diameter of the third passage 133 is smaller than the diameter of the second passage 132, oil flowing toward the intake camshaft 15 is restrained through the third passage 133. Since it is possible to adjust the flow rate of oil by appropriately setting the diameters of the second passage 132 and the third passage 133, it is possible to supply a desirable amount of oil to the intake camshaft 15 without complicating the configuration of the oil passage 130 inside the cylinder head 13. According to the present embodiment, since the diameter of the fifth passage 135 is smaller than the diameter of fourth passage, oil flowing toward the oil chamber 44 of the hydraulic tensioner 40 is restrained through the fifth passage 135. Since it is possible to adjust the flow rate of oil by appropriately setting the diameters of the fourth passage 134 and the fifth passage 135, it is possible to supply a desirable amount of oil to the oil chamber 44 of the hydraulic tensioner 40 without complicating the configuration of the oil passage 130 inside the cylinder head 13. Moreover, according to the present embodiment, the diameter of the third passage 133 is smaller than the diameter of the fifth passage 135. Thus, it is possible to adjust, in a well-balanced manner, the amount of oil supplied to each of the intake camshaft 15 and the oil chamber 44 of the hydraulic tensioner 40. Therefore, according to the present embodiment, it is possible to supply, in a well-balanced manner, a desirable amount of oil to each of the intake camshaft 15 and the oil chamber 44 of the hydraulic tensioner 40 without complicating the structure of the oil passage 130 inside the cylinder head 13.

According to the present embodiment, the center line of the second passage 132 and the center line of the third passage 133 are on the same straight line L1. In addition, the center line of the third passage 133 is also on the same straight line L1. Therefore, the configuration of the first passage 131, the second passage 132 and the third passage 133 is simple. Moreover, it is possible to easily machine the first passage 131, the second passage 132 and the third passage 133.

In the present embodiment, as shown in FIG. 6, the center line of the third passage 133 is not aligned with the intake camshaft 15 as seen from the axial direction of the intake camshaft 15. There is no need to arrange the third passage 133 so that the center line of the third passage 133 intersects with the intake camshaft 15. Since there is little limitation on the position of the third passage 133, it is possible to further reduce complication of the structure of the oil passage 130 inside the cylinder head 13.

According to the present embodiment, the first inlet 131i of the first passage 131 of the cylinder head 13 is not aligned with the outlet port 120o of the oil passage 120 of the cylinder body 12, but the gasket 28 has the oil hole 55 that connects between the first inlet 131i and the outlet port 120o (see FIG. 9). There is no need to align the position of the first inlet 131i of the first passage 131 with the position of the outlet port 120o of the oil passage 120. According to the present embodiment, since there is little limitation on the position of the first passage 131, it is possible to further simplify the structure of the oil passage 130 inside the cylinder head 13.

It will be appreciated that the embodiment of the present invention hereinbefore described is given by way of example only, and is not intended to limit the scope of the invention in any way. Although one embodiment has been described above, the embodiment described above is merely an example, and various other embodiments are possible.

In the embodiment described above, the center line of the second passage 132 and the center line of the third passage 133 are on the same straight line L1, but there is no particular limitation thereto. The center line of the second passage 132 and the center line of the third passage 133 do not need to be on the same straight line. Similarly, the center line of the first passage 131 does not need to be on the same straight line as the center line of the second passage 132 or the center line of the third passage 133.

As seen from the axial direction of the intake camshaft 15, the center line of the third passage 133 may intersect with the intake camshaft 15.

As seen along the cylinder axial line 31c, the first inlet 131i of the first passage 131 of the cylinder head 13 may be located directly above the outlet port 120o of the oil passage 120 of the cylinder body 12. The center line of the first passage 131 and the center line of the oil passage 120 may be located on the same straight line.

Although the third passage 133 is configured to supply oil to the intake camshaft 15 in the embodiment described above, the third passage 133 may be configured to supply oil to the exhaust camshaft 16. For example, the positions of the intake camshaft 15 and the exhaust camshaft 16 may be switched around.

It will be appreciated that the term straddled vehicle or straddled motor vehicle used herein, and as used in the art, is meant to include at least the following terms also used in the art: straddle-type vehicle or motor vehicle, saddle-straddling type vehicle or motor vehicle.

Although the vehicle according to the embodiment described above is a motorcycle 1, the vehicle is not limited to a motorcycle 1. The vehicle may be a straddled vehicle other than a motorcycle, e.g., an auto tricycle, a motorbike, motor tricycle, quad bike, an ATV (All Terrain Vehicle), scooter, moped or a snowmobile, for example. The vehicle may be any vehicle other than a straddled vehicle.

### List of integers:

1: Motorcycle (vehicle), 3: Rear wheel (driving wheel), 7: Chain (power transmitting member), 10: Internal combustion engine, 11: Crankcase, 12: Cylinder body, 13: Cylinder head, 15: Intake camshaft (camshaft), 15S: Second sprocket, 21: Crankshaft, 21S: First sprocket, 23: Cam chain, 28: Gasket, 31: Cylinder, 35: Cam cap, 40: Hydraulic tensioner, 44: Oil chamber, 55: Oil hole (hole), 120: Oil passage, 120o: Outlet port, 130: Oil passage, 131: First passage, 131i: First inlet, 131o: First outlet, 132: Second passage, 132i: Second inlet, 132o: Second outlet, 133: Third passage, 133i: Third inlet, 133o: Third outlet, 134: Fourth passage, 134i: Fourth inlet, 134o: Fourth outlet, 135: Fifth passage, 135i: Fifth inlet, 135o: Fifth outlet.

## Claims

1. An internal combustion engine (10) comprising:
a crankcase (11) that supports a crankshaft (21);
a cylinder body (12) that is connected to the crankcase (11) and comprises a cylinder (31) therein;
a cylinder head (13) that is connected to the cylinder body (12) and supports a camshaft (15);
a cam cap (35) that rotatably sandwiches the camshaft (15) between the cam cap (35) and the cylinder head (13);
a first sprocket (21S) that is secured to the crankshaft (21);
a second sprocket (15S) that is secured to the camshaft (15);
a cam chain (23) that is wound around the first sprocket (21S) and the second sprocket (15S);
a hydraulic tensioner (40) that tensions the cam chain (23), wherein the hydraulic tensioner (40) comprises an oil chamber (44) to which oil is supplied and which is attached to the cylinder head (13);
an oil passage (120) that comprises an outlet port (120o) and is formed inside the cylinder body (12); and
an oil passage (130) that is formed inside the cylinder head (13), wherein:
the oil passage (130) formed inside the cylinder head (13) comprises:
a first passage (131) comprising a first inlet (131i) and a first outlet (131o), wherein the first inlet (131i) communicates with the outlet port (120o) of the oil passage (120) formed inside the cylinder body (12);
a second passage (132) comprising a second inlet (132i) and a second outlet (132o), wherein the second inlet (132i) is connected to the first outlet (131o) of the first passage (131);
a third passage (133) comprising a third inlet (133i) and a third outlet (133o), wherein the third inlet (133i) is connected to the second outlet (132o) of the second passage (132), and the third outlet (133o) is opening toward the camshaft (15) or the cam cap (35);
a fourth passage (134) comprising a fourth inlet (134i) and a fourth outlet (134o), wherein the fourth inlet (134i) is connected to the first outlet (131o) of the first passage (131) and the second inlet (132i) of the second passage (132); and
a fifth passage (135) comprising a fifth inlet (135i) and a fifth outlet (135o), wherein the fifth inlet (135i) is connected to the fourth outlet (134o) of the fourth passage (134), and the fifth outlet (135o) is opening toward the oil chamber (44) of the hydraulic tensioner (40):
**characterized in that**
a diameter of the third passage (133) is smaller than a diameter of the second passage (132);
a diameter of the fifth passage (135) is smaller than a diameter of the fourth passage (134); and
the diameter of the third passage (133) is smaller than the diameter of the fifth passage (135).

2. The internal combustion engine (10) according to claim 1, wherein:
the diameter of the second passage (132) is less than or equal to a diameter of the first passage (131); and
the diameter of the fourth passage (134) is less than or equal to the diameter of the first passage (131).

3. The internal combustion engine (10) according to claim 1 or 2, wherein a length of the third passage (133) is shorter than a length of the second passage (132).

4. The internal combustion engine (10) according to any one of claims 1 to 3, wherein a length of the third passage (133) is shorter than a length of the first passage (131).

5. The internal combustion engine (10) according to any one of claims 1 to 4, wherein a length of the third passage (133) is shorter than a length of the fourth passage (134).

6. The internal combustion engine (10) according to any one of claims 1 to 5, wherein a length of the third passage (133) is shorter than a length of the fifth passage (135).

7. The internal combustion engine (10) according to any one of claims 1 to 6, wherein a center line of the second passage (132) and a center line of the third passage (133) are on a same straight line (L1).

8. The internal combustion engine (10) according to any one of claims 1 to 6, wherein a center line of the first passage (131), a center line of the second passage (132) and a center line of the third passage (133) are on a same straight line (L1).

9. The internal combustion engine (10) according to any one of claims 1 to 8, wherein a center line of the third passage (133) is not aligned with the camshaft (15) as seen from an axial direction of the camshaft (15).

10. The internal combustion engine (10) according to any one of claims 1 to 9, wherein:
the internal combustion engine (10) comprises a gasket (28) interposed between the cylinder body (12) and the cylinder head (13);
the first inlet (131i) of the first passage (131) is not aligned with the outlet port (120o) of the oil passage (120) of the cylinder body (12) as seen along a center line of the first passage (131) of the cylinder head (13); and
the gasket (28)
comprises a hole (55) that connects between the outlet port (120o) of the oil passage (120) of the cylinder body (12) and the first inlet (131i) of the first passage (131) of the cylinder head (13).

11. A vehicle (1) comprising:
an internal combustion engine (10) according to any one of claims 1 to 10;
a power transmitting member (7) that is linked to the internal combustion engine (10); and
a driving wheel (3) that is linked to the power transmitting member (7).

## Patentansprüche

1. Verbrennungsmotor (10), Folgendes umfassend:
ein Kurbelgehäuse (11), welches eine Kurbelwelle (21) stützt;
einen Zylinderkörper (12), welcher mit dem Kurbelgehäuse (11) verbunden ist und einen Zylinder (31) darin umfasst;
einen Zylinderkopf (13), welcher mit dem Zylinderkörper (12) verbunden ist und eine Nockenwelle (15) stützt;
eine Nockenkappe (35), welche drehbar die Nockenwelle (15) zwischen der Nockenkappe (35) und dem Zylinderkopf (13) sandwichartig umgreift;
ein erstes Zahnrad (21S), welches an der Kurbelwelle (21) gesichert ist;
ein zweites Zahnrad (15S), welches an der Nockenwelle (15) gesichert ist;
eine Nockenkette (23), welche um das erste Zahnrad (21S) und das zweite Zahnrad (15S) gewunden ist;
einen hydraulischen Spanner (40), welcher die Nockenkette (23) spannt, wobei der hydraulische Spanner (40) eine Ölkammer (44) umfasst, an welche Öl zugeführt wird, und welche an dem Zylinderkopf (13) befestigt ist;
einen Öldurchgang (120), welcher einen Auslassanschluss (120o) umfasst und innerhalb des Zylinderkörpers (12) gebildet ist; und
einen Öldurchgang (130), welcher innerhalb des Zylinderkopfs (13) gebildet ist, wobei:
der innerhalb des Zylinderkopfs (13) gebildete Öldurchgang (130) Folgendes umfasst:
einen ersten Durchgang (131), umfassend einen ersten Einlass (131i) und einen ersten Auslass (131o), wobei der erste Einlass (131i) mit dem Auslassanschluss (120o) des Öldurchgangs (120) kommuniziert, welcher innerhalb des Zylinderkörpers (12) gebildet ist;
einen zweiten Durchgang (132), umfassend einen zweiten Einlass (132i) und einen zweiten Auslass (132o), wobei der erste Einlass (132i) mit dem ersten Auslass (131o) des ersten Durchgangs (131) verbunden ist;
einen dritten Durchgang (133), umfassend einen dritten Einlass (133i) und einen dritten Auslass (133o), wobei der dritte Einlass (133i) mit dem zweiten Auslass (132o) des zweiten Durchgangs (132) verbunden ist, und der dritte Auslass (133o) sich in Richtung der Nockenwelle (15) oder der Nockenkappe (35) öffnet;
einen vierten Durchgang (134), umfassend einen vierten Einlass (134i) und einen vierten Auslass (134o), wobei der vierte Einlass (134i) mit dem ersten Auslass (131o) des ersten Durchgangs (131) und mit dem zweiten Einlass (132i) des zweiten Durchgangs (132) verbunden ist; und
einen fünften Durchgang (135), umfassend einen fünften Einlass (135i) und einen fünften Auslass (135o), wobei der fünfte Einlass (135i) mit dem vierten Auslass (134o) des vierten Durchgangs (134) verbunden ist, und der fünfte Auslass (135o) sich in Richtung der Ölkammer (44) des hydraulischen Spanners (40) öffnet;
**dadurch gekennzeichnet, dass**
ein Durchmesser des dritten Durchgangs (133) kleiner als ein Durchmesser des zweiten Durchgangs (132) ist;
ein Durchmesser des fünften Durchgangs (135) kleiner als ein Durchmesser des vierten Durchgangs (134) ist; und
der Durchmesser des dritten Durchgangs (133) kleiner als der Durchmesser des fünften Durchgangs (135) ist.

2. Verbrennungsmotor (10) nach Anspruch 1, wobei:
ein Durchmesser des zweiten Durchgangs (132) kleiner oder gleich einem Durchmesser des ersten Durchgangs (131) ist; und
der Durchmesser des vierten Durchgangs (134) kleiner oder gleich dem Durchmesser des ersten Durchgangs (131) ist.

3. Verbrennungsmotor (10) nach Anspruch 1 oder 2, wobei eine Länge des dritten Durchgangs (133) kürzer als eine Länge des zweiten Durchgangs (132) ist.

4. Verbrennungsmotor (10) nach einem der Ansprüche 1 bis 3, wobei eine Länge des dritten Durchgangs (133) kürzer als eine Länge des ersten Durchgangs (131) ist.

5. Verbrennungsmotor (10) nach einem der Ansprüche 1 bis 4, wobei eine Länge des dritten Durchgangs (133) kürzer als eine Länge des vierten Durchgangs (134) ist.

6. Verbrennungsmotor (10) nach einem der Ansprüche 1 bis 5, wobei eine Länge des dritten Durchgangs (133) kürzer als eine Länge des fünften Durchgangs (135) ist.

7. Verbrennungsmotor (10) nach einem der Ansprüche 1 bis 6, wobei eine Mittellinie des zweiten Durchgangs (132) und eine Mittellinie des dritten Durchgangs (133) auf einer selben Geraden (L1) liegen.

8. Verbrennungsmotor (10) nach einem der Ansprüche 1 bis 6, wobei eine Mittellinie des ersten Durchgangs (131), eine Mittellinie des zweiten Durchgangs (132) und eine Mittellinie des dritten Durchgangs (133) auf einer selben Geraden (L1) liegen.

9. Verbrennungsmotor (10) nach einem der Ansprüche 1 bis 8, wobei eine Mittellinie des dritten Durchgangs (133) aus einer Axialrichtung der Nockenwelle (15) betrachtet, nicht mit der Nockenwelle (15) ausgerichtet ist.

10. Verbrennungsmotor (10) nach einem der Ansprüche 1 bis 9, wobei:
der Verbrennungsmotor (10) eine Dichtung (28) umfasst, welche zwischen dem Zylinderkörper (12) und dem Zylinderkopf (13) zwischengeschaltet ist;
der erste Einlass (131i) des ersten Durchgangs (131), entlang einer Mittellinie des ersten Durchgangs (131) des Zylinderkopfs (13) betrachtet, nicht mit dem Auslassanschluss (120o) des Öldurchlasses (120) des Zylinderkörpers (12) ausgerichtet ist; und
die Dichtung (28) ein Loch (55) umfasst, welches eine Verbindung zwischen dem Auslassanschluss (120o) des Öldurchlasses (120) des Zylinderkörpers (12) und dem ersten Einlass (131i) des ersten Durchgangs (131) des Zylinderkopfs (13) herstellt.

11. Fahrzeug (1), Folgendes umfassend:
einen Verbrennungsmotor (10) nach einem der Ansprüche 1 bis 10;
ein Kraftübertragungselement (7), welches mit dem Verbrennungsmotor (10) verbunden ist; und
ein Antriebsrad (3), welches mit dem Kraftübertragungselement (7) verbunden ist.

## Revendications

1. Moteur à combustion interne (10) comprenant :
un carter de vilebrequin (11) qui supporte un vilebrequin (21) ;
un corps de cylindre (12) qui est raccordé au carter de vilebrequin (11) et comprend un cylindre (31) à l'intérieur de celui-ci ;
une tête de cylindre (13) qui est raccordée au corps de cylindre (12) et supporte un arbre à cames (15) ;
un chapeau de came (35) qui prend en sandwich de manière rotative l'arbre à cames (15) entre le chapeau de came (35) et la tête de cylindre (13) ;
un premier pignon (21S) qui est fixé au vilebrequin (21) ;
un deuxième pignon (15S) qui est fixé à l'arbre à cames (15) ;
une chaîne de came (23) qui enroulée autour du premier pignon (21S) et du deuxième pignon (15S) ;
un tendeur hydraulique (40) qui tend la chaîne de came (23), dans lequel le tendeur hydraulique (40) comprend une chambre d'huile (44) à laquelle de l'huile est fournie et qui est rattachée à la tête de cylindre (13) ;
un passage d'huile (120) qui comprend un orifice de sortie (120o) et est formé à l'intérieur du corps de cylindre (12) ; et
un passage d'huile (130) qui est formé à l'intérieur de la tête de cylindre (13), dans lequel :
le passage d'huile (130) formé à l'intérieur de la tête de cylindre (13) comprend :
un premier passage (131) comprenant une première entrée (131i) et une première sortie (131o), dans lequel la première entrée (131i) communique avec l'orifice de sortie (120o) du passage d'huile (120) formé à l'intérieur du corps de cylindre (12) ;
un deuxième passage (132) comprenant une deuxième entrée (132i) et une deuxième sortie (132o), dans lequel la deuxième entrée (132i) est raccordée à la première sortie (131o) du premier passage (131) ;
un troisième passage (133) comprenant une troisième entrée (133i) et une troisième sortie (133o), dans lequel la troisième entrée (133i) est raccordée à la deuxième sortie (132o) du deuxième passage (132), et la troisième sortie (133o) s'ouvre vers l'arbre à cames (15) ou le chapeau de came (35) ;
un quatrième passage (134) comprenant une quatrième entrée (134i) et une quatrième sortie (134o), dans lequel la quatrième sortie (134i) est raccordée à la première sortie (131o) du premier passage (131) et à la deuxième entrée (132i) du deuxième passage (132) ; et
un cinquième passage (135) comprenant une cinquième entrée (135i) et une cinquième sortie (135o), dans lequel la cinquième entrée (135i) est raccordée à la quatrième sortie (134o) du quatrième passage (134), et la cinquième sortie (135o) s'ouvre vers la chambre d'huile (44) du tendeur hydraulique (40) :
**caractérisé en ce que**
un diamètre du troisième passage (133) est inférieur à un diamètre du deuxième passage (132) ;
un diamètre du cinquième passage (135) est inférieur à un diamètre du quatrième passage (134) ; et
le diamètre du troisième passage (133) est inférieur au diamètre du cinquième passage (135).

2. Moteur à combustion interne (10) selon la revendication 1, dans lequel :
le diamètre du deuxième passage (132) est inférieur ou égal à un diamètre du premier passage (131) ; et
le diamètre du quatrième passage (134) est inférieur ou égal au diamètre du premier passage (131).

3. Moteur à combustion interne (10) selon la revendication 1 ou 2, dans lequel une longueur du troisième passage (133) est plus courte qu'une longueur du deuxième passage (132).

4. Moteur à combustion interne (10) selon l'une quelconque des revendications 1 à 3, dans lequel une longueur du troisième passage (133) est plus courte qu'une longueur du premier passage (131).

5. Moteur à combustion interne (10) selon l'une quelconque des revendications 1 à 4, dans lequel une longueur du troisième passage (133) est plus courte qu'une longueur du quatrième passage (134).

6. Moteur à combustion interne (10) selon l'une quelconque des revendications 1 à 5, dans lequel une longueur du troisième passage (133) est plus courte qu'une longueur du cinquième passage (135).

7. Moteur à combustion interne (10) selon l'une quelconque des revendications 1 à 6, dans lequel un axe central du deuxième passage (132) et un axe central du troisième passage (133) sont sur une même ligne droite (L1).

8. Moteur à combustion interne (10) selon l'une quelconque des revendications 1 à 6, dans lequel un axe central du premier passage (131), un axe central du deuxième passage (132) et un axe central du troisième passage (133) sont sur une même ligne droite (L1).

9. Moteur à combustion interne (10) selon l'une quelconque des revendications 1 à 8, dans lequel un axe central du troisième passage (133), vu depuis une direction axiale de l'arbre à cames (15), n'est pas aligné avec l'arbre à cames (15).

10. Moteur à combustion interne (10) selon l'une quelconque des revendications 1 à 9, dans lequel :
le moteur à combustion interne (10) comprend un joint d'étanchéité (28) intercalé entre le corps de cylindre (12) et la tête de cylindre (13) ;
la première entrée (131i) du premier passage (131), vue le long d'un axe central du premier passage (131) de la tête de cylindre (13), n'est pas alignée avec l'orifice de sortie (120o) du passage d'huile (120) du corps de cylindre (12) ; et
le joint d'étanchéité (28) comprend un trou (55) qui établit un raccordement entre l'orifice de sortie (120o) du passage d'huile (120) du corps de cylindre (12) et la première entrée (131i) du premier passage (131) de la tête de cylindre (13).

11. Véhicule (1) comprenant :
un moteur à combustion interne (10) selon l'une quelconque des revendications 1 à 10;
un élément de transmission de puissance (7) qui est relié au moteur à combustion interne (10) ; et
une roue motrice (3) qui est reliée à l'élément de transmission de puissance (7).
